# EUROPEAN PATENT SPECIFICATION

(11) **EP 3 314 958 B1**
(45) Date of publication and mention of the grant of the patent: **01.01.2020**
(21) Application number: 16739115.0
(22) Date of filing: 14.07.2016
(51) Int. Cl.: H04W 56/00

(54) **COMMUNICATIONS DEVICES AND METHODS**
KOMMUNIKATIONSVORRICHTUNGEN UND -VERFAHREN
DISPOSITIFS ET PROCÉDÉS DE COMMUNICATION

(30) Priority: 29.07.2015 EP 15178910; 06.11.2015 EP 15193499
(43) Date of publication of application: 02.05.2018
(73) Proprietor: Sony Corporation, Tokyo 108-0075 (JP)
(72) Inventor: WAKABAYASHI, Hideji, Basingstoke Hampshire RG22 4SB (GB); MARTIN, Brian Alexander, Basingstoke Hampshire RG22 4SB (GB); TSUDA, Shinichiro, Basingstoke Hampshire RG22 4SB (GB); KAHTAVA, Jussi Tapani, Basingstoke Hampshire RG22 4SB (GB); UCHIYAMA, Hiromasa, Basingstoke Hampshire RG22 4SB (GB)
(74) Representative: D Young & Co LLP
(86) International application number: PCT/EP2016/066755
(87) International publication number: WO 2017/016889

(56) References cited:
- US-A1- 2009 122 782
- INTEL CORPORATION: "D2DSS detection delay requirements", 3GPP DRAFT; R4-150166 D2DSS DETECTION DELAY REQUIREMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Athens, Greece; 20150209 - 20150213 8 February 2015 (2015-02-08), XP050937661, Retrieved from the Internet: URL:http://www.3gpp.org/ftp/Meetings_3GPP_ SYNC/RAN4/Docs/ [retrieved on 2015-02-08]
- LG ELECTRONICS: "Synchronization enhancements for UE-to-network relay operation", 3GPP DRAFT; R1-152722 SYNCHRONIZATION ENHANCEMENTS FOR UE-TO-NETWORK RELAY OPERATION_LG, 3RD GENERATION PARTNERSHIP PROJECT (3GPP), MOBILE COMPETENCE CENTRE ; 650, ROUTE DES LUCIOLES ; F-06921 SOPHIA- , vol. RAN WG1, no. Fukuoka, Japan; 20150525 - 20150529 24 May 2015 (2015-05-24), XP050973783, Retrieved from the Internet: URL:http://www.3gpp.org/ftp/Meetings_3GPP_ SYNC/RAN1/Docs/ [retrieved on 2015-05-24]

## Description

### TECHNICAL FIELD OF THE DISCLOSURE

The present disclosure relates to communications devices and methods, and more specifically to providing an arrangement in which a communications device may select an appropriate global synchronisation system.

Embodiments of the present disclosure consider situations concerning D2D and V2X communications systems.

### BACKGROUND OF THE DISCLOSURE

The "background" description provided herein is for the purpose of generally presenting the context of the disclosure. Work of the presently named inventors, to the extent it is described in this background section, as well as aspects of the description which may not otherwise qualify as prior art or may not form part of the state of the art at the time of filing, are neither expressly or impliedly admitted as prior art or state of the art against the present invention.

Mobile telecommunication systems, such as those based on the 3GPP defined UMTS and Long Term Evolution (LTE) architecture, are able to support more sophisticated services than simple voice and messaging services offered by previous generations of mobile telecommunication systems. For example, with the improved radio interface and enhanced data rates provided by LTE systems, a user is able to enjoy high data rate applications such as video streaming and video conferencing on mobile communications devices that would previously only have been available via a fixed line data connection.

The demand to deploy fourth generation networks is therefore strong and the coverage area of these networks, i.e. geographic locations where access to the networks is possible, is increasing rapidly and expected to continue to increase. However, although the coverage and capacity of fourth generation networks is expected to significantly exceed those of previous generations of communications networks, there are still limitations on network capacity and the geographical areas that can be served by such networks. These limitations may, for example, be particularly relevant in situations in which networks are experiencing high load and high-data rate communications between communications devices, or when communications between communications devices are required but the communications devices may not be within the coverage area of a network. In order to address these limitations, in LTE release-12 the ability for LTE communications devices to perform device-to-device (D2D) communications is introduced.

D2D communications allow communications devices that are in close proximity to directly communicate with each other, both when within and when outside of a coverage area or when the network fails. This D2D communications ability allows communications devices that are in close proximity to communicate with one another although they may not be within the coverage area of a network. The ability for communications devices to operate both inside and outside of coverage areas makes LTE systems that incorporate D2D capabilities well suited to applications such as public safety communications, for example. Public safety communications require a high degree of robustness whereby devices can continue to communicate with one another in congested networks and when outside a coverage area.

Other types of relatively new protocols, features, arrangements or sets thereof of mobile telecommunications systems include for example relay node technology which can extend the coverage for base station or another node for communicating with terminals, in terms of throughput and/or geographical coverage. Small cells may also be provided wherein a small cell can be controlled by a base station or operate as a base station with a limited coverage (either geographically or in the terminals accepted by the small cell, e.g. only terminals associated with a specific customer/company account may be able to connect to it). As a result, a variety of technologies, some of them alternative and other compatible technologies, can be now be used in a mobile telecommunication system.

In parallel, the development of vehicle-related communications has emerged and attracted a growing interest. These communications can sometimes be called vehicle-to-everything (V2X) communications which can refer to any one or combination of the following: vehicle-to-vehicle (V2V) communications, vehicle-to-infrastructure (V2I), vehicle-to-pedestrians (V2P) communications, vehicle-to-home (V2H) communications and any other type of vehicle-to-something communications. They enable a vehicle to communicate with its environment, be it another vehicle, a traffic light, a level (railroad) crossing, infrastructure equipment in the vicinity of a road, a pedestrian, a cyclist, etc. In a typical V2I scenario, V2I communications is used for collision prevention, driver alerting and/or other intersection related activity. In this kind of embodiment, the V2X-enabled terminal has to find out the relevant RSU to connect to and exchange information with. More generally, this new set of technologies can enable a variety of features such a convoying of vehicles, safety features, environmental friendly car driving and/or management and can also facilitate the operation of driverless/autonomous cars.

Whilst D2D communications techniques can provide an arrangement for communicating between devices, D2D is generally targeting public safety uses, so-called machine type communication (MTC) applications -which tend to be low-throughput and high-latency communications- or conventional terminals. As a result, they are not designed to deal with low-latency communications required for V2X communications. As an illustration, V2X systems can be required to have a delay of less than 100ms from an event to a corresponding action. For example, from the moment a first car in front of a second car suddenly brakes until the second car starts braking as well, the time must be less than 100ms in some circumstances. This takes into account the time for the first vehicle to detect the braking, signal the braking to other vehicles, the second vehicle receiving the signal, processing the signal to decide whether to take any actions, up to the moment the second vehicle actually starts braking. Such a delay requirements therefore does not leave much time for the first vehicle to signal the situation to the other vehicles, including the second vehicle, and the V2X communications should be carried out in a high priority, high reliability and low-latency manner as much as possible. A low priority may delay the communications more than necessary, a low reliability may result in retransmissions being carried out which also significantly increase the delay in the transmissions while a high latency clearly increases the risk of taking up too much of the time period allocated from an event to the corresponding action.

In contrast, in a conventional D2D environment, the resources are allocated in one of two ways which may not be presently suitable for V2X environments. In a first mode, the resources are allocated on request from the terminals and for time periods of generally 40ms. As a result, by the time a terminal requests resources, receives the resource allocation response and uses the allocated resources to transmit its message, up to 80ms may have passed which is clearly unacceptable in a V2X environment. Additional, if the vehicle is in a vehicle which is moving at a relatively high speed, identifying which other node (e.g. terminal, relay node, base station or any other mobile system node) is likely to be suitable for communicating efficiently with the terminal can be challenging. While, at a moment in time, a first node may be the closest and/or have the assumed best link with the terminal, by the time resources are allocated and the terminal sends signals, the first node may no longer be the closest and/or have the assumed best link with the terminal (if for example the terminal is quickly moving away from the node). As a result, transmissions from the terminal with the first node may suffer from a low-reliability and/or high-latency which are also not desirable for V2X communications. As a result, the present telecom systems and arrangements, and in particular D2D ones, face a large number of problems to become suitable or more suitable for V2X or V2X-like types of communications.

US 2009/0122782 A1 discloses a wireless node which may share timing information together with a synchronization metric characterising the timing information. The timing information may be used by another node in the event that the other node does not receive a GPS-based timing reference.

### SUMMARY OF THE DISCLOSURE

According to an example of the present disclosure, a communications device for transmitting data to and receiving data from a mobile communications network, comprises a transmitter configured to transmit signals representing the data via a wireless access interface to the mobile communications network, a receiver configured to receive the signals representing the data via the wireless access interface from the mobile communications network and a controller configured to control the transmitter and the receiver to transmit and to receive the data via the wireless access interface. The controller is configured to identify during an initialisation phase, from received information, a predetermined priority for synchronising the transmitter and receiver for transmitting and receiving the signals representing the data to and from the mobile communications network, the predetermined priority including at least one of a global navigation signal, a regional navigation signal and a synchronisation signal received from another communications device, the global navigation signal and the regional navigation signal having a higher priority than the synchronisation signal received from the other communications device, and to control the transmitter and the receiver to synchronise the transmitting and the receiving based on a selected one of the global navigation signal, the regional navigation signal and the synchronisation signal received from the other communications device in accordance with the predetermined priority, wherein the initialisation phase includes receiving an indication of the priority from a Subscriber Identity Module, SIM.

Various further aspects and features of the present technique are defined in the appended claims.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings wherein like reference numerals designate identical or corresponding parts, and wherein:
Figure 1 provides an example of a schematic diagram of a mobile communications system according to an example of an LTE standard;
Figure 2 illustrates an example system for communicating with at least a terminal in a heterogeneous network;
Figure 3 illustrates an example of a heterogeneous environment;
Figure 4 illustrates an example of synchronisation sources in D2D communications;
Figure 5 illustrates an example of the types of synchronisation sources in accordance with D2D communications;
Figure 6 demonstrates an example of global synchronisation in accordance with D2D communications;
Figure 7 demonstrates an example of local synchronisation in accordance with D2D communications;
Figure 8 comprises illustrations of two example subframes including the transmission of synchronisation signals for D2D communications; where
Figure 8A shows an example subframe 800 with a normal cyclic prefix (CP); and
Figure 8B shows an example subframe 801 with an extended CP;
Figure 9 comprises illustrations of two example subframes including the transmission of synchronisation signals for D2D discovery; where
Figure 9A shows an example subframe 900 with a normal CP; and
Figure 9B shows an example subframe 901 with an extended CP;
Figure 10 illustrates an example synchronisation system for a mobile communications network in accordance with the present disclosure;
Figure 11 illustrates an example sequence chart of GNSS selected with network assistance information in accordance with the present technique;
Figure 12 illustrates an example sequence chart of GNSS selected without network assistance information in accordance with the present technique; and
Figure 13 shows a flowchart illustrating an example process of selection of synchronisation sources in accordance with the present technique.

### DESCRIPTION OF EXAMPLE EMBODIMENTS

Hereinafter preferred embodiments of the present technique will be described in detail with reference to the appended drawings. Note that, in this specification and appended drawings, structural elements that have substantially the same function and structure can be denoted with the same reference numerals, and repeated explanation of these structural elements may be omitted.

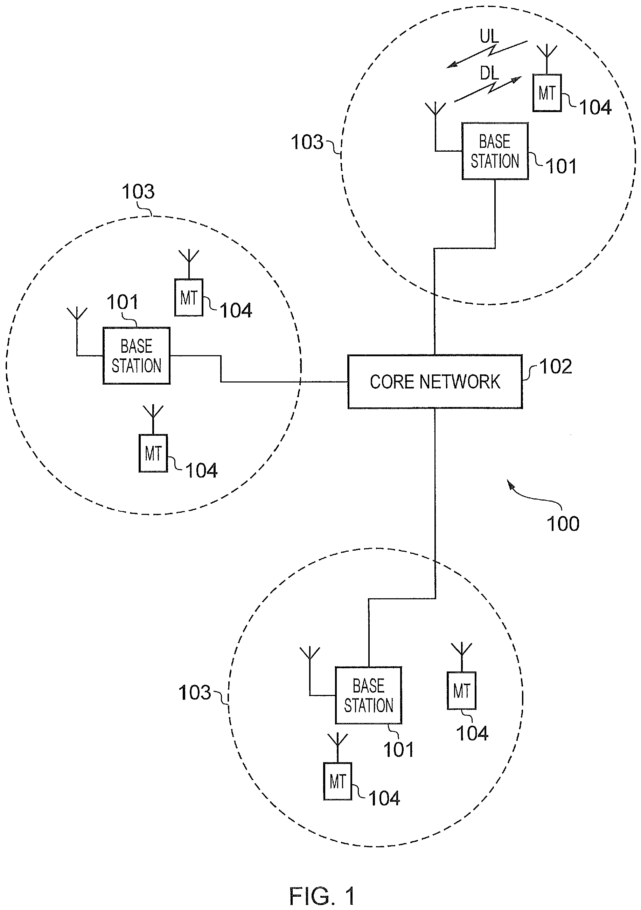

Figure 1 provides a schematic diagram illustrating some basic functionality of a conventional mobile telecommunications network, using for example a 3GPP defined UMTS and/or Long Term Evolution (LTE) architecture. The mobile telecommunications network / system 100 of Figure 1 operates in accordance with LTE principles and which may be adapted to implement embodiments of the disclosure as described further below. Various elements of Figure 1 and their respective modes of operation are well-known and defined in the relevant standards administered by the 3GPP (RTM) body, and also described in many books on the subject, for example, Holma H. and Toskala A [1]. It will be appreciated that operational aspects of the telecommunications network which are not specifically described below may be implemented in accordance with any known techniques, for example according to the relevant standards.

The network 100 includes a plurality of base stations 101 connected to a core network 102. Each base station provides a coverage area 103 (i.e. a cell) within which data can be communicated to and from terminal devices 104. Data is transmitted from base stations 101 to terminal devices 104 within their respective coverage areas 103 via a radio downlink. Data is transmitted from terminal devices 104 to the base stations 101 via a radio uplink. The uplink and downlink communications are made using radio resources that are licenced for use by the operator of the network 100. The core network 102 routes data to and from the terminal devices 104 via the respective base stations 101 and provides functions such as authentication, mobility management, charging and so on. Terminal devices may also be referred to as mobile stations, user equipment (UE), user terminal, mobile terminal, mobile device, terminal, mobile radio, and so forth. Base stations may also be referred to as transceiver stations / nodeBs / e-nodeBs / eNodeB, eNB, and so forth.

Mobile telecommunications systems such as those arranged in accordance with the 3GPP defined Long Term Evolution (LTE) architecture use an orthogonal frequency division multiplex (OFDM) based interface for the radio downlink (so-called OFDMA) and the radio uplink (so-called SC-FDMA).

The base stations 101 of Figure 1 may be realised as any type of evolved Node B (eNodeB) such as a macro eNodeB and a small eNodeB. The small eNodeB may be an eNodeB such as a pico eNodeB, a micro eNodeB, and a home (femto) eNodeB that covers a cell smaller than a macro cell. Instead, the base station 101 may be realised as any other types of base stations such as a NodeB and a base transceiver station (BTS). The base station 101 may include a main body (that is also referred to as a base station apparatus) configured to control radio communication, and one or more remote radio heads (RRH) disposed in a different place from the main body. In addition, various types of terminals, which will be described below, may each operate as the base station 101 by temporarily or semi-persistently executing a base station function.

Any of the communications devices 104 may be realised as a mobile terminal such as a smartphone, a tablet personal computer (PC), a notebook PC, a portable game terminal, a portable/dongle type mobile router, and a digital camera, or an in-vehicle terminal such as a car navigation apparatus. The communications device 104 may also be realised as a terminal (that is also referred to as a machine type communication (MTC) terminal) that performs machine-to-machine (M2M) communication. Furthermore, the terminal apparatus 104 may be a radio communication module (such as an integrated circuit module including a single die) mounted on each of the terminals

In the present disclosure, a base station providing a small cell is generally differentiated from a conventional base station mostly (and sometimes exclusively) in the range provided by the base station. Small cells include for example the cells also called femtocell, picocell or microcell. In other words, small cells can be considered as similar to macrocells in the channels and features provided to the terminals, but with the use of less power for base station transmissions, which results in a smaller range. A small can therefore be the cell or coverage provided by a small cell base station. In other examples, the term small cell can also refer to a component carrier when more than one component carriers are available.

Moreover, mobile networks can also include Relay Nodes (RN) which can further increase the complexity of the mobile system and of the reduction of interference in a small cell network. Relay technologies are known generally to provide an arrangement for receiving signals from a base station and for retransmitting the received signals to a UE in a mobile communications network, or to receive signals transmitted from a UE for re-transmission to a base station of a mobile communications network. The aim of such relay nodes is to try to extend a radio coverage area provided by a mobile communications network to reach communications devices which would otherwise be out of range of the mobile communications network or to improve the ratio of successful transmissions between a terminal and a base station.

A mobile network which includes a variety of base stations and/or relay nodes (e.g. macro-cell base stations, small cell base stations and/or relays) is sometimes referred to as a heterogeneous network.

Heterogeneous networks that would have very dense footprint of access points will no longer be designed and set up in a coordinated fashion by a single mobile network operator. Due to the sheer number of small cells needed their installation will happen much more in an ad hoc fashion, with end users and other non-MNO entities also installing small cells. The overall network management would still be done by an operator for all small cells using that MNO's assigned frequency band. This evolution from today's operator installed networks to more unplanned ad hoc networks is what we refer to as 'dense network' in this description.

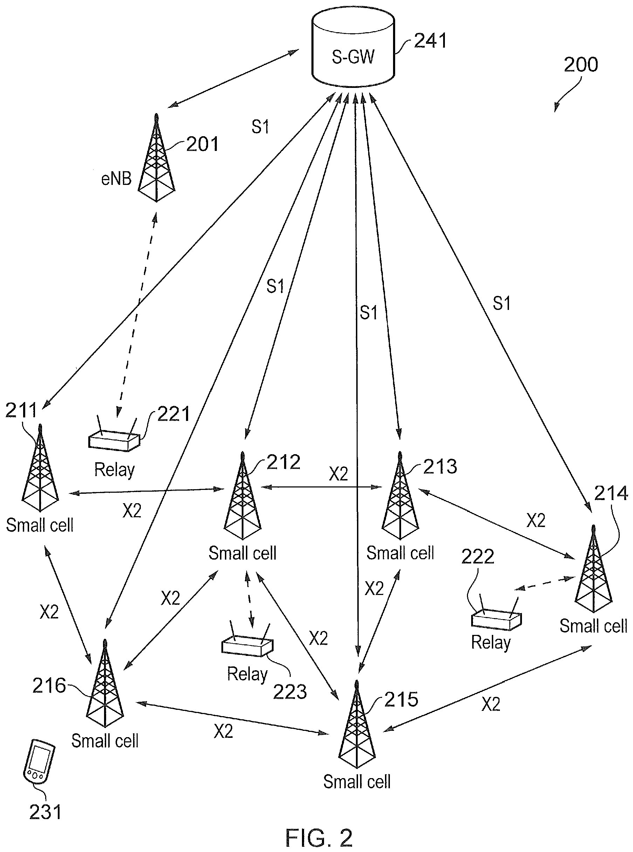

Figure 2 illustrates an example heterogeneous system 200 for communicating with at least a terminal 231. In this system 200, a base station 201 provides a macrocell and six base stations 211-216 provide small cell coverage, potentially overlapping with the coverage of the base station 201. Additionally, three RN 221-223 are provided and are operating with base stations 201, 214 and 212, respectively. A relay node can generally be defined as a wireless radio access point for relaying transmission and which thus does not implement all of the functionalities of a base station. It is in general not directly connected to the core network but uses wireless access (inband or outband) for backhaul link to connect with a base station. In other examples, the backhaul link may also be provided over a wired connection. This is in contrast to a small cell base station which, as mentioned above, can generally operate like a base station and is thus connected to the core network, as illustrated by the arrows between the small cell base stations 211-216 and the Serving Gateway "S-GW" in Figure 2. Relay nodes may also send or receive data with the terminals or base stations which can also add to the complexity of dealing with interference in an environment as illustrated in Figure 2.

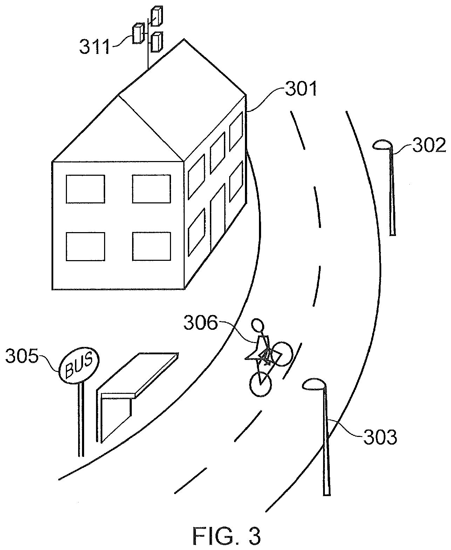

Another example of a heterogeneous environment is illustrated in Figure 3, where a macrocell base station 311 is provided in the same area as small cells provided by a base station 301 in or in the vicinity of a building, by a base station 302 in a first lamppost, by a base station 303 in a second lamppost, by a base station 305 provided in a bus stop and by a mobile base station 306 provided in a cyclist back-pack. In another example, the infrastructure unit 303 and 302 in lamp posts may be relay nodes relaying data in the uplink and/or downlink to the macrocell base station 311 or to another infrastructure unit (e.g. another relay node). In this example, the interference and link quality experience can vary greatly depending on traffic and on time: the cyclist may enter an interference / poor link quality zone and later leave this are, while the base station 301, if associated with an office, may potentially only be used during office hours and may be turned off during the rest of the day or the rest of the week. In such a heterogeneous network, a terminal which is V2X-capable may wish to communicate with any of the other nodes in the area depending on the circumstances, such as whether the terminal is associated with a vehicle and moving.

Synchronisation is a challenge faced by V2X communications and environments. Particularly when V2X UEs are moving quickly on roads with moderate to high speed limits, mobility becomes an issue. The V2X UE joining or exiting of D2D groups or cells, merging or splitting of D2D groups, and handover between them, is done much more frequently, and so it is imperative that all V2X UEs and infrastructure are globally synchronised. Selecting the synchronisation source for V2X communications, then, is a challenge which must be overcome.

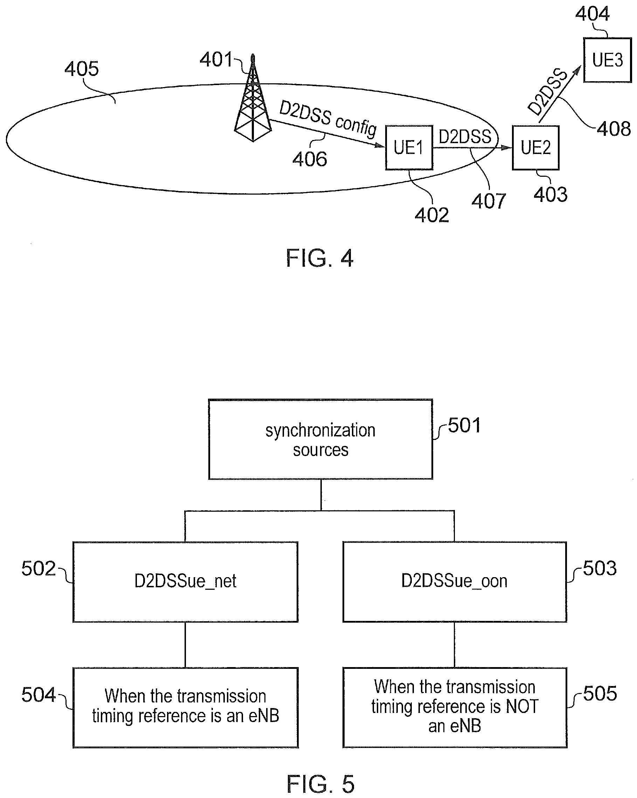

Figure 4 illustrates an example of how D2D UEs may be synchronised with accordance to 3GPP Release 12 D2D. An eNodeB 401 with a coverage area 405 may send a D2D synchronisation signal (D2DSS) 406 to a first UE 402 inside the coverage area 405 of the eNodeB 401, in order to synchronise the timing of the first UE 402 with the eNodeB 401. A second UE 403 is outside of the coverage area 405 of the eNodeB 401 and so is not able to receive the D2DSS 406 from the eNodeB 401. However, the first UE 402 is able to relay 407 the D2DSS 406 received from the eNodeB 401 to the second UE 403. The second UE 403, once having received the D2DSS 407 from the first UE 402, is able to relay 408 the received D2DSS 407 to a third UE 404. Thus, out-of-coverage UEs 402 and 403 are able to use the accurate synchronisation source 406.

The type of synchronisation source can be categorised as two types, which are shown in Figure 5. The synchronisation source 501 can be *D2DSSue_net* 502, which refers to the origin of the source being the network, with the transmission timing reference being an eNodeB 504. The synchronisation source 501 can alternately be *D2DSSue_oon* 503, which refers to the origin of the source being something other than the network, with the transmission timing reference not being an eNodeB 505. For the purposes of the present disclosure, and all example embodiments of the present disclosure, the synchronisation source will be treated as being *D2DSSue_net* 502.

UEs typically use temperature compensated crystal oscillators (TCXO) to control their timing. TCXOs have a frequency offset within the range of ±10 ppm. Free running TCXOs are not good enough to use for coherent receivers. On the contrary, global navigation satellite systems (GNSS) have better accuracy, of less than 100 ns, depending on the GNSS signal strength. This level is good enough to use as the synchronisation reference. In addition, the area of a GNSS is very wide compare to the cell coverage of an eNodeB. Thus, synchronisation with GNSS is superior to synchronisation using a UE's autonomous clock.

There are a number of GNSS systems, which include, but are not limited to, Russia's GLONASS and China's BeiDou (BDS). Another such GNSS is the United States Global Positioning System (GPS), which is described on the website of National Instruments [2].

The United States Global Positioning System (GPS) is well known for its consumer applications of helping drivers navigate the country side. The underlying technology uses a network of satellites precisely timed by a ground network of high precision Rubidium based Atomic Clocks. Through time based triangulation of RF signals, the GPS is able to derive both a highly accurate time (within 50 µS) and position (within 6-10 m). In this way, GPS transfers the precise timing capabilities of the Atomic Clock ground stations to relatively low-cost device that can then be used to improve accuracy and stability of a software defined radio application.

GPS receivers designed for timing purposes output a pulse-per-second (PPS) signal that is accurate on the scale of nanoseconds. The GPS signal is controlled by the US Naval Observatory, and it can be received with an accuracy of a few parts in 10⁻¹³. That PPS signal can be used to steer, or discipline, an oven controlled crystal oscillator (OCXO) in a phase lock loop (PLL) configuration. Essentially, a PPS signal derived from the OCXO is compared to the GPS PPS, and a control circuit adjusts the oscillator frequency to keep the two PPS signals at the same time offset, or phase.

The GPS PPS signal in the short term (less than a thousand seconds) is quite noisy. Various factors cause it to bounce around by perhaps 50 to 150 nanoseconds. That doesn't sound like much, but in fractional frequency terms, it's not so great -- even 100 nanoseconds per second is only 1x10⁻⁸. Over time this noise averages out to zero, so day-over-day the GPS PPS is several orders of magnitude better.

In a 3GPP discussion paper on automatic gain control and frequency error for D2D [3], it was proposed that RAN1 should assume an initial frequency offset for a typical UE to be within ±10 ppm, and for the frequency stability for a typical UE to be within ±40 ppb/sec.

There was a discussion [4] on global synchronisation vs local synchronisation in 3GPP. Global synchronisation may be achieved by synchronising directly to a common global reference that is available to all devices (i.e. a GNSS like GPS) or by performing a distributed synchronisation algorithm, as demonstrated in the discussion paper. However, there are some drawbacks in global synchronisation. Thus, 3GPP finally decided to use local synchronisation for D2D. It uses the common synchronisation reference among the UEs in the same group, which are located locally.

As disclosed in [4], distributed synchronisation has been largely studied in scientific literature and various synchronisation techniques have been applied in ad-hoc systems such as Wi-Fi and Bluetooth. One way of classifying synchronisation techniques is to divide them between global synchronisation and local synchronisation.

Global synchronisation is based on the assumption that all devices are able to acquire (directly or indirectly) a unique common synchronisation reference. Global synchronisation may be achieved by synchronising directly to a common global reference that is available to all devices (i.e. a GPS) or by performing a distributed synchronisation algorithm.

The global reference approach is discarded in [4] as it is determined that GPS is not a suitable synchronisation source for public safety for a number of reasons. These include security reasons, as satellites for global positioning systems are owned by certain countries and as such are not a suitable choice for synchronisation reference of public safety equipment employed by other countries. GPS signals are potentially subject to jamming and their accuracy is not guaranteed, and GPS is not a solution for indoor UEs, which would need means to inherit synchronisation from other outdoor UEs. Further, LTE networks are often not synchronised to GPS, which makes GPS unsuitable for synchronising out of coverage UEs with UEs that are under NW coverage (partial NW coverage PS case) if UEs that are under NW coverage use the synchronisation source from the LTE network, and additionally GPS power consumption significantly affects the autonomy of out-of-coverage PS UEs.

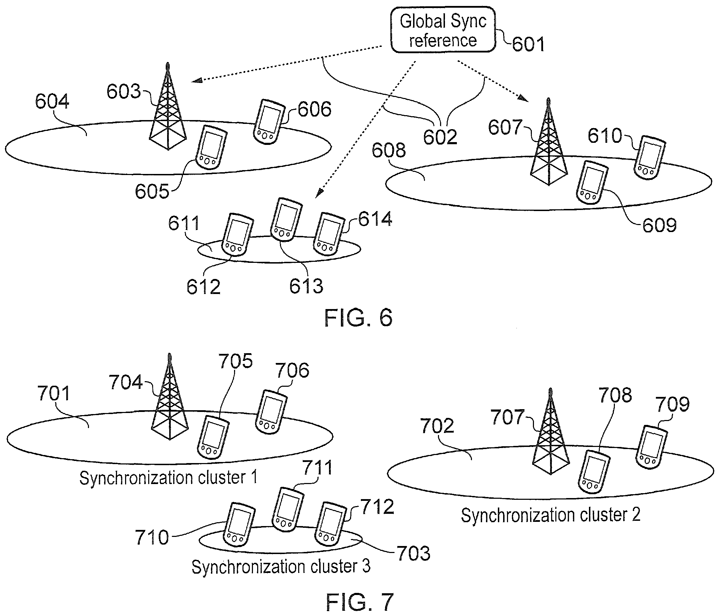

Figure 6 demonstrates an example of global synchronisation in accordance with D2D communications. A global synchronisation reference source 601 transmits a synchronisation signal 602 to a first eNodeB 603, which has a coverage area 604 containing two UEs 605 and 606. The synchronisation signal 602 is also transmitted to a second eNodeB 607, which has a coverage area 608 containing two further UEs 609 and 610. In each of these cases, as the UEs 605 and 606 are in coverage 604 of the first eNodeB 603, and the UEs 609 and 610 are in coverage 608 of the second eNodeB 607, the eNodeBs 603 and 607 are able to transmit the received synchronisation signal 602 to the UEs 605, 606, 609 and 610. Further, the synchronisation signal 602 is transmitted to a D2D group 611 containing three UEs 612, 613 and 614 which may perform distributed synchronisation to ensure that they are each synchronised to the same timing. Thus, all UEs 605, 606, 609, 610, 612, 613 and 614 are all synchronised to the same timing.

Differently to global synchronisation, local synchronisation does not assume that the whole network is globally synchronised to a unique common reference. In the context of LTE cellular networks, local synchronisation is assumed in unsynchronised deployments (where each cell operates with an autonomous clock) and for inter-PLMN (public land mobile network) roaming. In the context of D2D, local synchronisation may be implemented in an "on demand" fashion, where UEs synchronise locally to a synchronisation reference for specific purposes, e.g., when setting up a communication channel, but without the requirement of having the same synchronisation reference as other (possible far away) devices. Devices acting as synchronisation references to other UEs are called cluster heads (CH). Local synchronisation is a convenient solution for LTE-based D2D and it fulfils the system requirements efficiently.

Figure 7 demonstrates an example of local synchronisation in accordance with D2D communications. Three synchronisation clusters 701, 702 and 703 each have their own local synchronisation. Two UEs 705 and 706 in the first synchronisation cluster 701 may, for example, receive a synchronisation signal from a serving eNodeB 704, such that the UEs 705 and 706 and the eNodeB 704 are synchronised to the same timing. Two UEs 708 and 709 in the second synchronisation cluster 702 may, for example, receive a synchronisation signal from a serving eNodeB 707, such that the UEs 708 and 709 and the eNodeB 707 are synchronised to the same timing. Three UEs 710, 711 and 712 in the third synchronisation cluster 703 may perform distributed synchronisation to ensure that they are each synchronised to the same timing.

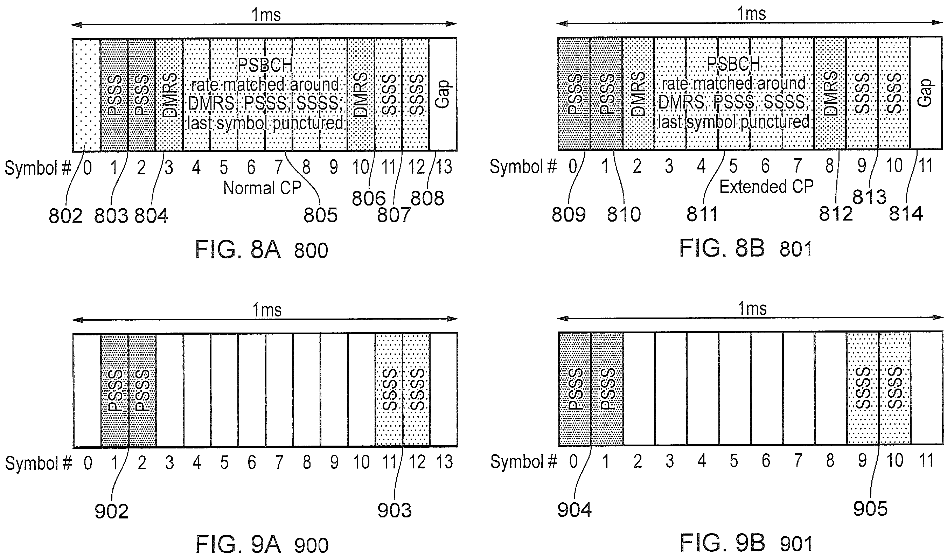

In conventional D2D (Release 12), two types of synchronisation signal are defined. One is the eNodeB synchronisation signal (conventional primary and secondary synchronisation signals [PSS/SSS] in Release 8), and the other is sidelink synchronisation signal (SLSS) in D2D discovery/communication resources. A D2D UE may transmit an SLSS when certain conditions are met. For example, a UE may send an SLSS every 40ms in a specific symbol position. Figures 8 and 9 from a discussion paper on RAN 1/2 agreements [5] show examples of subframes including the transmission of synchronisation signals. Comparatively with legacy synchronisation signals, PSSS (primary sidelink synchronisation signal) is analogous to PSS, SSSS (secondary sidelink synchronisation signal) is analogous to SSS, and PSBCH (physical sidelink broadcast channel) is analogous to PBCH (physical broadcast channel).

Figure 8 comprises illustrations of two example subframes including the transmission of synchronisation signals for D2D communications. Figure 8A shows an example subframe 800 with a normal cyclic prefix (CP). The symbol 802 at position 0 of the subframe of Figure 8A may be part of a PSBCH signal, and may be followed by the PSSS synchronisation signal during symbols 803 at positions 1 and 2. The symbol 804 at position 3 may be a demodulation reference signal (DMRS) which is used for channel estimation, and this may be followed by further PSBCH transmission in symbols 805 at positions 4 to 9 of the subframe. A further DMRS signal may be transmitted during symbol 806 at position 10, followed by an SSSS synchronisation signal during symbols 807 at positions 11 and 12 of the subframe. The subframe may end with a gap in transmission during symbol 808 at position 13.

Figure 8B shows an example subframe 801 with an extended CP. A PSSS synchronisation signal may be transmitted during symbols 809 at positions 0 and 1 of the subframe, followed by a DMRS signal, which may be transmitted during symbol 810 at position 2. A PBSCH signal may be transmitted during symbols 811 at positions 3 to 7 of the subframe. A further DMRS signal may be transmitted during symbol 812 at position 8, followed by an SSSS synchronisation signal during symbols 813 at positions 9 and 10 of the subframe. The subframe may end with a gap in transmission during symbol 814 at position 11.

Figure 9 comprises illustrations of two example subframes including the transmission of synchronisation signals for D2D discovery. Figure 9A shows an example subframe 900 with a normal CP. The symbols 902 at positions 1 and 2 of the subframe may be used for transmitting a PSSS synchronisation signal, while the symbols 903 at positions 11 and 12 of the subframe may be used for transmitting an SSSS synchronisation signal. Similarly, Figure 9B shows an example subframe 901 with an extended CP. The symbols 904 at positions 0 and 1 of the subframe may be used for transmitting a PSSS synchronisation signal, while the symbols 905 at positions 9 and 10 of the subframe may be used for transmitting an SSSS synchronisation signal.

In each of these Figures 8A, 8B, 9A and 9B, the SLSS (SSSS and PSSS) may be relayed from an eNodeB synchronisation source, which is highly accurate.

In public safety communications, the area of communication is relatively local. It was assumed that the mobility speed of a terminal would be low, for example a pedestrian (e.g. 4 km/h). It is reasonable, in this case, to use localised synchronisation, because a D2D group is operated in a specific area (e.g. a 300 m range). On the contrary, V2X requires high mobility and may require a fast joining, exiting or handover of the groups. Additionally, it is not so simple to define the boundary of group. Many cars are running on the road and it is possible that the group may change, two groups may merge or one group be split quickly due to high mobility speed.

One of the simple solutions to this problem is to use global synchronisation instead of conventional D2D synchronisation. It is not a viable solution to mix the different synchronisation sources in the same D2D group because of the coherence of the receiver. If V2X communications employed GPS (or other GNSS) based synchronisation system, all of the V2X UEs must use the same synchronisation, which originated from single source. The present disclosure envisions the V2X communication synchronisation system based on global synchronisation. However, this is different from the conventional D2D synchronisation mechanism. As previously discussed with regard to [4], there are some significant drawbacks to employing a global synchronisation system. These include indoor coverage (such as in a tunnel), power consumption of the UE, and an asynchronous eNodeB (i.e. an eNodeB not GNSS synchronised). It cannot be relied upon using the eNodeB synchronisation source for global synchronisation, but instead it is important to relay the global synchronisation signal to UEs which are for various reasons unable to use or receive the GNSS.

The present disclosure is related to using a global synchronisation source for V2X communications regardless of the commercial operators' coverage, or whether V2X UEs are out of coverage. The drawbacks of global synchronisation are solved by the present disclosure.

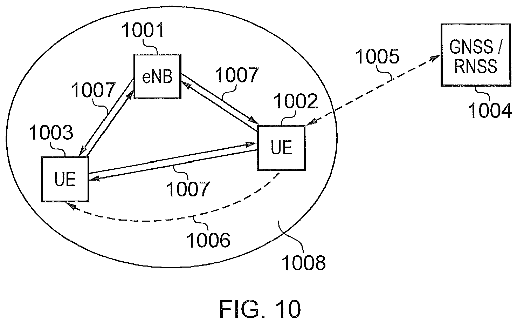

Figure 10 illustrates an example synchronisation system for a mobile communications network in accordance with the present disclosure. The mobile communications network comprises an eNodeB 1001 with a coverage area 1008. Two UEs 1002 and 1003 lie inside the coverage area 1008 of the eNodeB 1001. Each of the UEs 1002 and 1003 are operable to transmit and receive signals representing data 1007 from each other and from the eNodeB 1001. Each UE 1002 and 1003 are configured to identify during an initialisation phase, from received information, a predetermined priority for synchronising their timing, the predetermined priority including at least one of a global navigation signal, a regional navigation signal and a synchronisation signal received from another communications device, the global navigation signal and the regional navigation signal having a higher priority than the synchronisation signal received from the other communications device. The first UE 1002 is able to receive a global or regional navigation signal 1005 from the global or regional navigation satellite system 1004, and thus is able to use this signal 1005 to synchronise its timing for transmitted and received signals. However, the second UE 1003 may be unable to receive or use the global or regional navigation signal 1005 from the global or regional navigation satellite system 1004, and therefore must receive the synchronisation signal 1006 from the first UE 1002 in order to synchronise its timing for transmitted and received signals.

In some countries, a Regional Navigational Satellite System (RNSS) is also available in additional to a GNSS. Often, the RNSS systems have higher accuracy or stronger signal than GNSS systems, and therefore it is worth considering employing them should one be available. For a positioning purpose, a user can select any type of system freely. However, for the purpose of V2X synchronisation, the same system should be selected throughout groups. Therefore, the network needs to indicate which GNSS or RNSS system should be used for each group. This may be provided as a part of assistance information from the network, or may be preconfigured for each UE, for example in a Subscriber Identity Module (SIM).

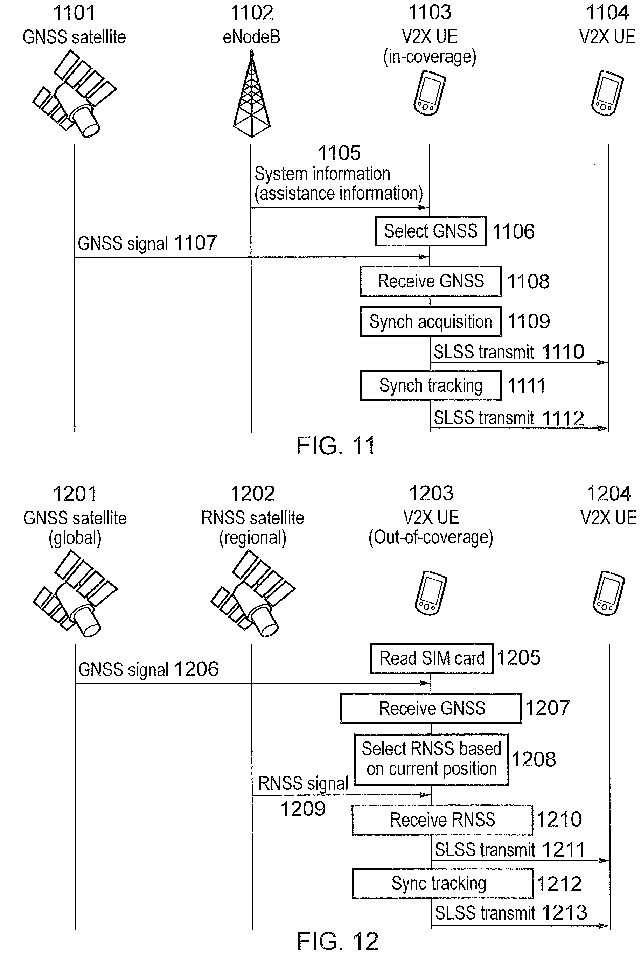

Figure 11 illustrates an example sequence chart of GNSS selected with network assistance information in accordance with the present technique. An eNodeB 1102 has a coverage area which contains a first V2X UE 1103. The eNodeB 1102 is configured to transmit system information (assistance information) 1105 to the first V2X UE 1103, which comprises an indication of the GNSS system that the first V2X UE 1103 should use for synchronisation purposes, and the parameters of the selected GNSS system. The system information 1105 may further comprise some additional information, such as assisted GPS information. The first V2X UE 1103 is then configured to select 1106 a GNSS system based on the received system information 1105, and then to receive 1108 a GNSS signal 1107 transmitted from a GNSS satellite 1101. From the received 1108 GNSS signal 1107, the first V2X UE 1103 is configured to acquire synchronisation information 1109, and synchronise its timing with regard to transmitting and receiving. The first V2X UE 1103 may be required to transmit an SLSS signal 1110 to a second V2X UE 1104, in the case that the second V2X UE 1104 is out of coverage of the eNodeB 1102 and so does not receive system information 1105 instructing it to receive the GNSS signal 1107 from the indicated GNSS satellite 1101. The second V2X UE 1104 may not be able to receive the GNSS signal 1107 from the indicated GNSS satellite 1101 for other reasons, such as, for example, being in a tunnel, or not being a high enough powered device to do so. The first V2X UE 1103 is configured to track the synchronisation signal 1111 to ensure that the first V2X UE 1103 is still correctly synchronised. In addition to this, the first V2X UE 1103 is configured to transmit the SLSS signals 1112 to the second V2X UE 1104 whilst tracking the synchronisation signal 1111, so that the second V2X UE 1104 can ensure that it is also still correctly synchronised.

Figure 12 illustrates an example sequence chart of GNSS selected without network assistance information in accordance with the present technique. A first V2X UE 1203 is configured to read a SIM module 1205, which comprises an indication of the GNSS system that the first V2X UE 1203 should use for synchronisation purposes, and the parameters of the selected GNSS system. The SIM module 1205 may further comprise some additional information, such as the GNSS list based on the region or area. The first V2X UE 1203 is able to determine its current location through GNSS measurement, and may then switch to using an RNSS system should it determine it is optimal to do so. The first V2X UE 1203, upon reading the SIM module 1205, is then configured to receive 1207 a GNSS signal 1206 transmitted from a GNSS satellite 1201. From the received 1207 GNSS signal 1206, the first V2X UE 1203 is configured to acquire synchronisation information and to synchronise its timing with regard to transmitting and receiving, and/or to select an RNSS system based on its current position 1208. The first V2X UE 1203 may then receive 1210 an RNSS signal 1209 from an RNSS satellite 1202. From the received 1210 RNSS signal 1209, the first V2X UE 1203 is configured to acquire synchronisation information and to synchronise its timing with regard to transmitting and receiving. The first V2X UE 1203 may be required to transmit an SLSS signal 1211 to a second V2X UE 1204, in the case that the second V2X UE 1204 is unable to receive the GNSS signal 1206 from the GNSS satellite 1201 or the RNSS signal 1209 from the RNSS satellite 1202 for a number of reason, such as, for example, being in a tunnel, or not being a high enough powered device to do so. The first V2X UE 1203 is configured to track the synchronisation signal 1212 to ensure that the first V2X UE 1203 is still correctly synchronised. In addition to this, the first V2X UE 1203 is configured to transmit the SLSS signals 1213 to the second V2X UE 1204 whilst tracking the synchronisation signal 1212, so that the second V2X UE 1204 can ensure that it is also still correctly synchronised. Here, the information comprised in the SIM module may be rewritable by a network. That is to say that the indication of the GNSS system may be updated in accordance with an instruction transmitted by the network.

A SIM module defined as according to the present disclosure may be a physical SIM card, an embedded soft SIM, or a similar alternative that fulfils the purposes of a subscriber identity module.

In conventional D2D operation, eNodeB synchronisation is automatically selected with high priority for the UE in-coverage above a threshold, because the eNodeB is an accurate synchronisation source. The Release 12 parameter *synchSourceThresh* has the same range as the in-coverage received signal reference power (RSRP) thresholds. When using GNSS systems, it may take some time for UEs to receive the signals. So once the UEs are out-of-sync with the selected GNSS satellite, it may be better for the UE to look to receive an SLSS signal from another UE which is currently synchronised to the selected GNSS satellite. The conventional priority of synchronisation sources selection is, in order of decreasing priority for synchronisation sources: eNodeBs that meet the LTE S-criterion, UEs within network coverage (among which higher priority is given to D2DSS received with higher *synchSourceThresh* measurement), UEs out of network coverage transmitting D2DSS from *D2DSSue_net* (among which higher priority is given to D2DSS received with higher *synchSourceThresh* measurement) and finally UEs out of network coverage transmitting D2DSS from *D2DSSue_oon* (among which higher priority is given to D2DSS received with higher *synchSourceThresh* measurement). If none of the above are selected, the UE uses its own internal clock.

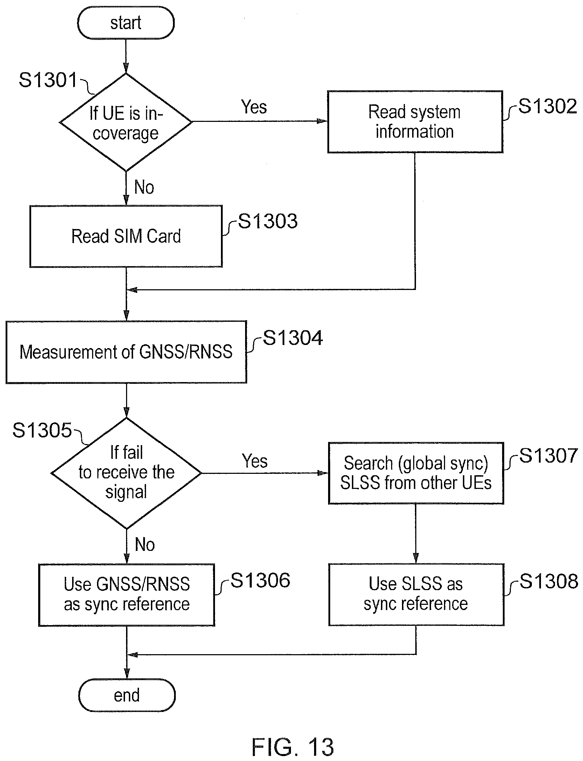

Figure 13 shows a flowchart illustrating an example process of selection of synchronisation sources in accordance with the present technique. A UE, in order to select a synchronisation source to which to synchronise the timing of its transmitting and receiving of signals, must first determine whether it is in-coverage of an eNodeB in step S1301. Should the UE be in-coverage of an eNodeB, then it will receive system information from the eNodeB, and reads this system information in step S1302 in order to determine which synchronisation source should be used. If the UE however is out of coverage, it will read its SIM module in step S1303, and use pre-configured information in order to determine which synchronisation source should be used. Once the UE is aware of which synchronisation source should be used, it attempts to receive and measure the GNSS or RNSS signal in step S1304, and determines whether or not it fails to receive the signal in step S1305. If the UE receives the GNSS or RNSS signal successfully, it the uses this is a reference in step S1306. However, should the UE fail to receive the GNSS/RNSS signal successfully, the UE then looks for an SLSS signal from another UE which has originated from a GNSS/RNSS signal, in step S1307. The UE, in step S1308, then uses the SLSS signal as a synchronisation reference. In order to distinguish the SLSS as originating from a global synchronisation signal, or whether it has originated from conventional sources like an eNodeB synchronisation source, or a UE autonomous synchronisation source, a new indicator *D2DSSue_global* may be used. Should the UE be unable to use any of the above synchronisation sources, it is configured to use its own internal clock.

It is possible that some V2X UEs cannot have GNSS receiver (e.g. because they are not highly powered enough) or that GNSS signals are not available to some V2X UEs (e.g. due to satellite coverage). For this reason, SLSS transmission is useful for V2X.

In conventional D2D operation, the parameter *networkControlledSyncTx,* the value *On* indicates that the UE should transmit synchronisation information (i.e. become the synchronisation source), while the value *Off* indicates that the UE should not transmit synchronisation information. In addition, if the value is not configured, the UE follows the parameter *syncTxThreshIC* with regard to whether the UE should send SLSS or not, based on the coverage quality.

A simple condition with regard to which UEs should transmit SLSS signals is that only UEs which receive a GNSS signal can send an SLSS signal. If all of the UEs can receive GNSS, then this is enough. However, as discussed, some UEs for various reasons do not receive GNSS signals. For example, pedestrian UEs cannot always activate GPS due to power consumption. Therefore, it might be useful to relay SLSS signals from only the UEs which receive GNSS signals, and disable the relaying of SLSS signals from UEs which do not

The number of hops which are allowed for synchronisation signalling relaying may depend on the accuracy of the original clock source. Depending on the GNSS and assistance equipment of it, the accuracy may be different. Configuring the maximum number of hops between devices which relay the SLSS signal (originating from a GNSS signal) may be useful, as would using an indicator of the current number of hops.

It is proposed that, with regard to embodiments of the present disclosure, in existing RRC parameter or pre-configuration, setting *networkControlledSyncTx* to *On,* because the SLSS transmission does not depend on the eNodeB, and disabling *syncTxThreshIC* (setting it to -∞) because the SLSS transmission is not related to eNodeB coverage.

A UE tracking a GNSS satellite may lose the signal under a tunnel or a similar road structure. For the purposes of positioning, a gyroscope or similar may provide tracking of current position under the tunnel. However, for synchronisation, this is not useful. Use of a relay configured to relay only synchronisation information is proposed for this case. It is important to distinguish the relay synchronisation signals from eNodeB synchronisation signals, or from conventional D2D reference signals. Public safety UEs should not use global synchronisation sources because the conventional UE does not support it.

Currently, 3GPP use 3 PSS sequences (index 29, 34, 25) for PSS among 63 Zadoff-Chu sequences. On top of that, the root indices {26, 37} are used in Release 12 D2D PSSS. It is proposed that embodiments of the present disclosure use unused sequence for V2X relay, in order to distinguish global synchronisation. Implementation of this relay may only have the function of sending synchronisation signals, or additional functions attached with UE-to-network relay. Alternatively, the relay may send the discovery signal, including the recommended synchronisation sources (e.g. PSS/SSS), and the UE may select the preferred eNodeB based on this indication.

The main points of modification of the present disclosure then, are to disable the eNodeB as a synchronisation source, to configure GNSS/RNSS systems to have the highest priority for use as the synchronisation source, and to introduce a new indicator *D2DSSue_global* to know whether or not an SLSS signal has originated from a global synchronisation signal, or whether it has originated from conventional sources like an eNodeB synchronisation source, or a UE autonomous synchronisation source.

Embodiments of the present disclosure may provide several benefits to V2X and D2D communications networks and systems, which include, but are not limited to the following. There is a provision of stable and global synchronisation for V2X UEs regardless of their cell coverage. V2X UEs which are used as relays, but for relaying synchronisation signals only, are much simpler, lower cost and power efficient compared to conventional relays. There are general system gains which include the provision of V2X operation everywhere, and the introduction of a simple synchronisation mechanism for high mobility UEs. Additional signalling is necessary for the present technique to be employed by existing D2D and V2X systems.

Accordingly, there have been provided communications devices and methods which can employ global synchronisation for V2X D2D communications, with predetermined priorities and selection mechanisms for various global synchronisation sources.

While the present disclosure has generally been presented in the context of V2X or V2X-like environments, the teachings of the present disclosure are not limited to such environments and may be used in any other environment where the infrastructure nodes and/or terminals may for example not be V2X-enabled. Also, whenever a reference is made to a V2X-enabled unit or node or a V2X environment, a V2X technology should be understood and combination of one or more of: V2V, V2I, V2P, V2H or any other type of vehicle-to-something technology and is not limited to the any currently existing standards.

Also, many of the examples above have been illustrated with a simple user equipment, the same teachings apply to a terminal which is not associated with any particular object or person, or associated with a pedestrian, a vehicle, a bicycle, a building or any other suitable object or person. In the case of an object, the terminal may be embedded in the object (e.g. a vehicle may comprise a mobile terminal in which a SIM card can be inserted), may be associated or paired with the object (e.g. a terminal may set up a Bluetooth connection with a Bluetooth module of the vehicle) or may simply be placed in a position wherein it is travelling with the object without having any particular communicative connection with the object (e.g. in the pocket of a driver or passenger in a vehicle).

Also, in the method discussed above, in particular the methods discussed in respect of Figures 11 to 13, the steps may be carried by one or more entities and by any relevant entities. In some example implementation, some of the steps may be carried out by a terminal and/or infrastructure nodes while other steps may be carried out by a base station or yet another element. In other examples, all steps may be carried out by the same entity, for example the communications device.

Additionally, the method steps discussed herein may be carried out in any suitable order. For example, steps may be carried out in an order which differs from an order used in the examples discussed above or from an order used anywhere else for listing steps (e.g. in the claims), whenever possible or appropriate. Thus, in some cases, some steps may be carried out in a different order, or simultaneously or in the same order.

As used herein, transmitting information or a message to an element may involve sending one or more messages to the element and may involve sending part of the information separately from the rest of the information. The number of "messages" involved may also vary depending on the layer or granularity considered.

Also, whenever an aspect is disclosed in respect of an apparatus or system, the teachings are also disclosed for the corresponding method. Likewise, whenever an aspect is disclosed in respect of a method, the teachings are also disclosed for any suitable corresponding apparatus or system.

Whenever the expressions "greater than" or "smaller than" or equivalent are used herein, it is intended that they discloses both alternatives "and equal to" and "and not equal to" unless one alternative is expressly excluded.

It is noteworthy that even though the present disclosure has been discussed in the context of LTE and/or D2D, its teachings are applicable to but not limited to LTE or to other 3GPP standards. In particular, even though the terminology used herein is generally the same or similar to that of the LTE standards, the teachings are not limited to the present version of LTE and could apply equally to any appropriate arrangement not based on LTE and/or compliant with any other future version of an LTE or 3GPP or other standard.

Various further aspects and features of the present technique are defined in the appended claims. Various modifications may be made to the embodiments hereinbefore described within the scope of the appended claims. For example although LTE has been presented as an example application, it will be appreciated that other mobile communications systems can be used for which the present technique can be used.

### References

[1] Holma H. and Toskala A., "LTE for UMTS OFDMA and SC-FDMA Based Radio Access", John Wiley & Sons Limited, January 2010.
[2] National Instruments, "Global Synchronization and Clock Disciplining with NI USRP-293x Software Defined Radio", April 2014.
[3] Qualcomm Incorporated, "AGC and Frequency Error for D2D", February 2014.
[4] ST-Ericsson, "Synchronization Procedures for D2D Discovery and Communication", May 2013.
[5] Qualcomm Incorporated, "Overview of Latest RAN 1/2 Agreements", February 2013.

## Claims

1. A communications device (1103, 1203) for transmitting data to and receiving data from a mobile communications network, the communications device comprising
a transmitter configured to transmit signals representing the data via a wireless access interface to the mobile communications network,
a receiver configured to receive the signals representing the data via the wireless access interface from the mobile communications network and
a controller configured to control the transmitter and the receiver to transmit and to receive the data via the wireless access interface, wherein the controller is configured
to identify during an initialisation phase, from received information, a predetermined priority for synchronising the transmitter and receiver for transmitting and receiving the signals representing the data to and from the mobile communications network, the predetermined priority including at least one of a global navigation signal, a regional navigation signal and a synchronisation signal received from another communications device, the global navigation signal and the regional navigation signal having a higher priority than the synchronisation signal received from the other communications device, and
to control the transmitter and the receiver to synchronise the transmitting and the receiving based on a selected one of the global navigation signal, the regional navigation signal and the synchronisation signal received from the other communications device in accordance with the predetermined priority,
wherein the initialisation phase includes receiving an indication of the priority from a Subscriber Identity Module, SIM.

2. A communications device as claimed in Claim 1, wherein the controller is configured
to detect that the receiver has not received the global navigation signal or the regional navigation signal, and
to control the transmitter and the receiver to synchronise the transmitting and the receiving based on the synchronisation signal received from the other communications device.

3. A communications device as claimed in Claim 2, wherein the controller is configured to determine that the synchronisation signal received from the other communications device was received by the other communications device as the global navigation signal or as the regional navigation signal, or was received by the other communications device via one or more other communications devices as the global navigation signal or as the regional navigation signal.

4. A communications device according to any preceding claim, the communications device comprising
an internal clock configured to generate timing information and to provide the timing information to the controller, wherein the controller is configured
to detect that the receiver has not received the global navigation signal, the regional navigation signal or the synchronisation signal from the other communications device, and
to control the transmitter and the receiver to synchronise the transmitting and the receiving based on the internal clock.

5. A method of operating a communications device for transmitting data to and receiving data from a mobile communications network, the method comprising
identifying during an initialisation phase, from received information, a predetermined priority for synchronising a transmitter and a receiver of the communications device for transmitting and receiving the signals representing the data to and from the mobile communications network, the predetermined priority including at least one of a global navigation signal, a regional navigation signal and a synchronisation signal received from another communications device, the global navigation signal and the regional navigation signal having a higher priority than the synchronisation signal received from the other communications device, and
controlling the transmitter and the receiver to synchronise the transmitting and the receiving based on a selected one of the global navigation signal, the regional navigation signal and the synchronisation signal received from the other communications device in accordance with the predetermined priority,
wherein the initialisation phase includes receiving an indication of the priority from a Subscriber Identity Module, SIM.

6. A method as claimed in Claim 5, the method comprising
detecting that the receiver has not received the global navigation signal or the regional navigation signal, and
controlling the transmitter and the receiver to synchronise the transmitting and the receiving based on the synchronisation signal received from the other communications device.

7. A method as claimed in Claim 6, the method comprising determining that the synchronisation signal received from the other communications device was received by the other communications device as the global navigation signal or as the regional navigation signal, or was received by the other communications device via one or more other communications devices as the global navigation signal or as the regional navigation signal.

8. A communications device according to any of Claims 1 to 4, wherein the controller is configured in combination with the transmitter and receiver
to receive a global navigation signal or a regional navigation signal from a satellite or to receive the global navigation signal or the regional navigation signal from another communications device, and
to transmit, as a synchronisation signal, the received global navigation signal or the regional navigation signal to a vehicular communications device.

9. A communications device as claimed in Claim 8, wherein the synchronisation signal is transmitted as an indicator to indicate that it was previously received as a global navigation signal or as a regional navigation signal.

10. A communications device as claimed in Claim 9, wherein the controller is configured to determine a maximum number of other communications devices which may relay the synchronisation signal received as the global navigation signal or as the regional navigation signal via each other to the communications device, before it may be transmitted to the vehicular communications device.

11. A communications device as claimed in any of Claims 8 to 10, wherein the controller is configured to control the transmitter to exclusively transmit synchronisation signals.

## Patentansprüche

1. Kommunikationsvorrichtung (1103, 1203) zum Übertragen von Daten zu und Empfangen von Daten aus einem mobilen Kommunikationsnetzwerk, wobei die Kommunikationsvorrichtung umfasst:
einen Sender, der dazu eingerichtet ist, die die Daten repräsentierenden Signale über eine drahtlose Zugangsschnittstelle an das Mobilkommunikationsnetz zu übertragen,
einen Empfänger, der dazu eingerichtet ist, die die Daten repräsentierenden Signale über die drahtlose Zugangsschnittstelle aus dem Mobilfunknetz zu empfangen, und
eine Steuerung, die dazu eingerichtet ist, den Sender und den Empfänger zum Senden bzw. Empfangen der Daten über die drahtlose Zugangsschnittstelle zu steuern, wobei die Steuerung dazu eingerichtet ist:
während einer Initialisierungsphase aus empfangenen Informationen eine vorbestimmte Priorität für die Synchronisation von Sender und Empfänger zum Senden bzw. Empfangen der die Daten repräsentierenden Signale zum bzw. vom Mobilfunknetz zu identifizieren, wobei die vorbestimmte Priorität mindestens eines von einem globalen Navigationssignal, einem regionalen Navigationssignal und einem von einer anderen Kommunikationsvorrichtung empfangenen Synchronisationssignal umfasst, wobei das globale Navigationssignal und das regionale Navigationssignal eine höhere Priorität haben als das von der anderen Kommunikationsvorrichtung empfangene Synchronisationssignal, und
den Sender und den Empfänger zu steuern, um das Senden bzw. Empfangen basierend auf einem ausgewählten des globalen Navigationssignals, des regionalen Navigationssignals und des von der anderen Kommunikationsvorrichtung empfangenen Synchronisationssignals gemäß der vorbestimmten Priorität zu synchronisieren,
wobei die Initialisierungsphase das Empfangen einer Anzeige der Priorität von einem Subscriber Identity Module, SIM, umfasst.

2. Kommunikationsvorrichtung nach Anspruch 1, wobei die Steuerung dazu eingerichtet ist:
zu erkennen, dass der Empfänger das globale Navigationssignal oder das regionale Navigationssignal nicht empfangen hat, und
den Sender und den Empfänger zu steuern, um das Senden bzw. Empfangen basierend auf dem von der anderen Kommunikationsvorrichtung empfangenen Synchronisationssignal zu synchronisieren.

3. Kommunikationsvorrichtung nach Anspruch 2, wobei die Steuerung dazu eingerichtet ist, zu bestimmen, ob das von der anderen Kommunikationsvorrichtung empfangene Synchronisationssignal durch die andere Kommunikationsvorrichtung als globales Navigationssignal oder als regionales Navigationssignal empfangen wurde oder durch die andere Kommunikationsvorrichtung über eine oder mehrere andere Kommunikationsvorrichtungen als globales Navigationssignal oder als regionales Navigationssignal empfangen wurde.

4. Kommunikationsvorrichtung nach einem vorhergehenden Anspruch, wobei die Kommunikationsvorrichtung eine interne Uhr umfasst, die dazu eingerichtet ist, Zeitinformationen zu erzeugen und die Zeitinformationen an die Steuerung zu liefern, wobei die Steuerung dazu eingerichtet ist, zu erkennen, dass der Empfänger das globale Navigationssignal, das regionale Navigationssignal oder das Synchronisationssignal von der anderen Kommunikationsvorrichtung nicht empfangen hat, und
den Sender und den Empfänger zu steuern, um das Senden bzw. Empfangen basierend auf der internen Uhr zu synchronisieren.

5. Verfahren zum Betreiben einer Kommunikationsvorrichtung zum Übertragen von Daten an und Empfangen von Daten aus einem mobilen Kommunikationsnetzwerk, wobei das Verfahren umfasst:
während einer Initialisierungsphase das Identifizieren einer vorbestimmten Priorität aus empfangenen Informationen zum Synchronisieren eines Senders und eines Empfängers der Kommunikationsvorrichtung zum Senden bzw. Empfangen der die Daten repräsentierenden Signale zum bzw. aus dem Mobilfunknetz, wobei die vorbestimmte Priorität mindestens eines von einem globalen Navigationssignal, einem regionalen Navigationssignal und einem von einer anderen Kommunikationsvorrichtung empfangenen Synchronisationssignal umfasst, wobei das globale Navigationssignal und das regionale Navigationssignal eine höhere Priorität haben als das von der anderen Kommunikationsvorrichtung empfangene Synchronisationssignal, und
das Steuern des Senders und des Empfängers, um das Senden bzw. Empfangen basierend auf einem ausgewählten des globalen Navigationssignals, des regionalen Navigationssignals und des von der anderen Kommunikationsvorrichtung empfangenen Synchronisationssignals gemäß der vorbestimmten Priorität zu synchronisieren,
wobei die Initialisierungsphase das Empfangen einer Anzeige der Priorität von einem Subscriber Identity Module, SIM, umfasst.

6. Verfahren nach Anspruch 5, wobei das Verfahren umfasst:
das Erkennen, dass der Empfänger das globale Navigationssignal oder das regionale Navigationssignal nicht empfangen hat, und
das Steuern des Senders und des Empfängers, um das Senden bzw. Empfangen basierend auf dem von der anderen Kommunikationsvorrichtung empfangenen Synchronisationssignal zu synchronisieren.

7. Verfahren nach Anspruch 6, wobei das Verfahren das Bestimmen umfasst, ob das von der anderen Kommunikationsvorrichtung empfangene Synchronisationssignal durch die andere Kommunikationsvorrichtung als globales Navigationssignal oder als regionales Navigationssignal empfangen wurde oder durch die andere Kommunikationsvorrichtung über eine oder mehrere andere Kommunikationsvorrichtungen als globales Navigationssignal oder als regionales Navigationssignal empfangen wurde.

8. Kommunikationsvorrichtung nach einem der Ansprüche 1 bis 4, wobei die Steuerung in Kombination mit dem Sender und Empfänger dazu eingerichtet ist, ein globales Navigationssignal oder ein regionales Navigationssignal von einem Satelliten zu empfangen oder das globale Navigationssignal oder das regionale Navigationssignal von einer anderen Kommunikationsvorrichtung zu empfangen, und
das empfangene globale Navigationssignal oder das regionale Navigationssignal als Synchronisationssignal an eine Fahrzeugkommunikationsvorrichtung zu übertragen.

9. Kommunikationsvorrichtung nach Anspruch 8, wobei das Synchronisationssignal als Indikator übertragen wird, um anzuzeigen, dass es zuvor als globales Navigationssignal oder als regionales Navigationssignal empfangen wurde.

10. Kommunikationsvorrichtung nach Anspruch 9, wobei die Steuerung dazu eingerichtet ist, eine maximale Anzahl anderer Kommunikationsvorrichtungen zu bestimmen, die das als globales Navigationssignal oder als regionales Navigationssignal empfangene Synchronisationssignal über einander an die Kommunikationsvorrichtung weiterleiten können, bevor es an die Fahrzeugkommunikationsvorrichtung übertragen werden kann.

11. Kommunikationsvorrichtung nach einem der Ansprüche 8 bis 10, wobei die Steuerung dazu eingerichtet ist, den Sender zu steuern, um ausschließlich Synchronisationssignale zu übertragen.

## Revendications

1. Dispositif (1103, 1203) de communications destiné à émettre des données à destination et à recevoir des données en provenance d'un réseau de communications mobiles, le dispositif de communications comportant un émetteur configuré pour émettre des signaux représentant les données via une interface d'accès sans fil à destination du réseau de communications mobiles, un récepteur configuré pour recevoir les signaux représentant les données via l'interface d'accès sans fil en provenance du réseau de communications mobiles et
un contrôleur configuré pour commander l'émetteur et le récepteur pour émettre et recevoir les données via l'interface d'accès sans fil, le contrôleur étant configuré
pour identifier pendant une phase d'initialisation, à partir d'informations reçues, une priorité prédéterminée pour synchroniser l'émetteur et le récepteur afin d'émettre et de recevoir les signaux représentant les données à destination et en provenance du réseau de communications mobiles, la priorité prédéterminée comprenant au moins un signal parmi un signal global de navigation, un signal régional de navigation et un signal de synchronisation reçus en provenance d'un autre dispositif de communications, le signal global de navigation et le signal régional de navigation ayant une priorité plus élevée que le signal de synchronisation reçu en provenance de l'autre dispositif de communications, et
pour commander l'émetteur et le récepteur afin de synchroniser l'émission et la réception d'après un signal sélectionné parmi le signal global de navigation, le signal régional de navigation et le signal de synchronisation reçus en provenance de l'autre dispositif de communications selon la priorité prédéterminée,
la phase d'initialisation comprenant la réception d'une indication de la priorité en provenance d'un module d'identité d'abonné, SIM.

2. Dispositif de communications selon la revendication 1, le contrôleur étant configuré pour détecter le fait que le récepteur n'a pas reçu le signal global de navigation ou le signal régional de navigation, et
pour commander l'émetteur et le récepteur afin de synchroniser l'émission et la réception d'après le signal de synchronisation reçu en provenance de l'autre dispositif de communications.

3. Dispositif de communications selon la revendication 2, le contrôleur étant configuré pour déterminer que le signal de synchronisation reçu en provenance de l'autre dispositif de communications a été reçu par l'autre dispositif de communications en tant que signal global de navigation ou en tant que signal régional de navigation, ou a été reçu par l'autre dispositif de communications via un ou plusieurs autres dispositifs de communications en tant que signal global de navigation ou en tant que signal régional de navigation.

4. Dispositif de communications selon l'une quelconque des revendications précédentes, le dispositif de communications comportant
une horloge interne configuré pour générer des informations de rythme et pour fournir les informations de rythme au contrôleur, le contrôleur étant configuré pour détecter le fait que le récepteur n'a pas reçu le signal global de navigation, le signal régional de navigation ou le signal de synchronisation en provenance de l'autre dispositif de communications, et pour commander l'émetteur et le récepteur afin de synchroniser l'émission et la réception d'après l'horloge interne.

5. Procédé d'exploitation d'un dispositif de communications destiné à émettre des données à destination et recevoir des données en provenance d'un réseau de communications mobiles, le procédé comportant les étapes consistant à
identifier pendant une phase d'initialisation, à partir d'informations reçues, une priorité prédéterminée pour synchroniser un émetteur et un récepteur du dispositif de communications afin d'émettre et de recevoir les signaux représentant les données à destination et en provenance du réseau de communications mobiles, la priorité prédéterminée comprenant au moins un signal parmi un signal global de navigation, un signal régional de navigation et un signal de synchronisation reçus en provenance d'un autre dispositif de communications, le signal global de navigation et le signal régional de navigation ayant une priorité plus élevée que le signal de synchronisation reçu en provenance de l'autre dispositif de communications, et commander l'émetteur et le récepteur afin de synchroniser l'émission et la réception d'après un signal sélectionné parmi le signal global de navigation, le signal régional de navigation et le signal de synchronisation reçus en provenance de l'autre dispositif de communications selon la priorité prédéterminée,
la phase d'initialisation comprenant la réception d'une indication de la priorité en provenance d'un module d'identité d'abonné, SIM.

6. Procédé selon la revendication 5, le procédé comportant les étapes consistant à
détecter le fait que le récepteur n'a pas reçu le signal global de navigation ou le signal régional de navigation, et
commander l'émetteur et le récepteur afin de synchroniser l'émission et la réception d'après le signal de synchronisation reçu en provenance de l'autre dispositif de communications.

7. Procédé selon la revendication 6, le procédé comportant l'étape consistant à déterminer que le signal de synchronisation reçu en provenance de l'autre dispositif de communications a été reçu par l'autre dispositif de communications en tant que signal global de navigation ou en tant que signal régional de navigation, ou a été reçu par l'autre dispositif de communications via un ou plusieurs autres dispositifs de communications en tant que signal global de navigation ou en tant que signal régional de navigation.

8. Dispositif de communications selon l'une quelconque des revendications 1 à 4, le contrôleur étant configuré en combinaison avec l'émetteur et le récepteur
pour recevoir un signal global de navigation ou un signal régional de navigation en provenance d'un satellite ou pour recevoir le signal global de navigation ou le signal régional de navigation en provenance d'un autre dispositif de communications, et pour émettre, en tant que signal de synchronisation, le signal global de navigation reçu ou le signal régional de navigation à destination d'un dispositif de communications de véhicule.

9. Dispositif de communications selon la revendication 8, le signal de synchronisation étant émis en tant qu'indicateur pour indiquer qu'il a été reçu précédemment en tant que signal global de navigation ou en tant que signal régional de navigation.

10. Dispositif de communications selon la revendication 9, le contrôleur étant configuré pour déterminer un nombre maximal d'autres dispositifs de communications susceptibles de relayer le signal de synchronisation reçu en tant que signal global de navigation ou en tant que signal régional de navigation les uns par l'intermédiaire des autres jusqu'au dispositif de communications, avant qu'il puisse être émis à destination du dispositif de communications de véhicule.

11. Dispositif de communications selon l'une quelconque des revendications 8 à 10, le contrôleur étant configuré pour commander l'émetteur afin d'émettre exclusivement des signaux de synchronisation.
